# EUROPEAN PATENT SPECIFICATION

(11) **EP 2 241 986 B1**
(45) Date of publication and mention of the grant of the patent: **19.06.2019**
(21) Application number: 10003819.9
(22) Date of filing: 09.04.2010
(51) Int. Cl.: G06F 21/62, G06F 16/21

(54) **Privacy and confidentiality preserving schema mapping repository for mapping reuse**
Datenschutz und Vertraulichkeit bewahrender Speicher für Schemaabbildungen zu deren Wiederverwendung
Dépôt de mappages de schémas préservant la confidentialité pour la réutilisation des mappages de schémas

(30) Priority: 13.04.2009 US 422318
(43) Date of publication of application: 20.10.2010
(73) Proprietor: SAP SE, 69190 Walldorf (DE)
(72) Inventor: Peuckert, Eric, 69190 Walldorf (DE); Flegel, Ulrich, 69190 Walldorf (DE); Miseldine, Philip, 69190 Walldorf (DE); Hackenbroich, Gregor, 69190 Walldorf (DE)
(74) Representative: Raible Deissler Lehmann Patentanwälte PartG mbB

(56) References cited:
- EP-A1- 1 990 740
- WO-A2-01/69839
- KR-B1- 100 859 162
- US-A1- 2007 016 771
- US-A1- 2008 181 405
- GERMAN E ET AL: "An architecture for linking medical decision-support applications to clinical databases and its evaluation" JOURNAL OF BIOMEDICAL INFORMATICS, ACADEMIC PRESS, NEW YORK, NY, US LNKD- DOI:10.1016/J.JBI.2008.10.007, vol. 42, no. 2, 1 April 2009 (2009-04-01), pages 203-218, XP025982975 ISSN: 1532-0464 [retrieved on 2008-11-07]

## Description

### Technical Field

The field of the invention relates generally to software, and particularly but not exclusively, to preserving confidentiality of database schema mappings.

### Background

The majority of the software solutions available today are using databases to import and retrieve data. Each software solution has its own unique data representation. Whenever these software solutions have to communicate or simply succeed one another, their data often must be transformed or aggregated. This requires creating specific schema mappings in order to transform the data from a source data schema to a target data schema. The task of creating such schema mappings is a tedious manual process that often requires trained experts who sometimes employ semi-automated schema matching techniques.

EP1990740 A1 describes schema matching for data migration.

The data integration and alignment while migrating data from customer legacy systems to new software solutions is a crucial task. The effort of creating schema mappings from source to target systems has to be repeated with every new customer, even if the systems and data schemas are similar. There are numerous security and privacy restrictions that do not allow reusing already developed schema mappings without the explicit permission of customers who own the schemas. Without these restrictions, the customer specific data structures can easily be reverse engineered from the stored mappings.

However, secure reuse of already existing schema mappings is an effective mechanism to save time and additional expenses during data migration. Thus, there is a need for methods to encrypt the already existing schema mappings, in order to allow the reuse of these mappings without violating the existing security and privacy restrictions.

### Summary

The invention is set out in the appended set of claims.

Described herein are systems and methods for importing and retrieving schema mappings while preserving privacy and confidentiality so that existing mappings can be reused across different customers without allowing reverse engineering of the original schemas. The disclosed embodiments provide different levels of mapping anonymity and correspondingly, available structural information in the retrieved mappings, in accordance with the security and privacy requirements.

### Brief Description of the Drawings

A better understanding of the present invention can be obtained from the following detailed description in conjunction with the following drawings.
Figure 1 is a block diagram of an exemplary system for importing and retrieving schema mappings while preserving privacy and confidentiality, in accordance with an embodiment of the present invention.
Figure 2 is a flow diagram of an exemplary process for importing anonymized mappings, in accordance with an embodiment of the present invention.
Figure 3A is an illustration in pseudo code of an exemplary method for importing schema mappings and anonymizing entire mapping elements, in accordance with an embodiment of the present invention.
Figure 3B is an illustration in pseudo code of an exemplary method for importing schema mappings and anonymizing each source and target schema element for each mapping element individually, in accordance with an embodiment of the present invention.
Figure 4 is a flow diagram of an exemplary process for retrieving anonymized mappings, in accordance with an embodiment of the present invention.
Figure 5A is an illustration in pseudo code of an exemplary method for retrieving schema mappings and searching for matching anonymized mapping elements, in accordance with an embodiment of the present invention.
Figure 5B is an illustration in pseudo code of an exemplary method for retrieving schema mappings and searching for matching anonymized source and target schema elements, in accordance with an embodiment of the present invention.
Figure 6 is an illustration in pseudo code of an exemplary method for encrypting additional information, in accordance with an embodiment of the present invention.
Figure 7 is an illustration in pseudo code of an exemplary method for decrypting additional information, in accordance with an embodiment of the present invention.
Figure 8A is an illustration in pseudo code of an exemplary method for anonymizing an entire mapping element, in accordance with an embodiment of the present invention.
Figure 8B is an illustration in pseudo code of an exemplary method for anonymizing a mapping by anonymizing each source and target schema element for each mapping element individually, in accordance with an embodiment of the present invention.
Figure 9 is an illustration in pseudo code of an exemplary method for de-anonymizing a mapping element, in accordance with an embodiment of the present invention.
Figure 10A is an example of importing concrete anonymized mapping elements, in accordance with an embodiment of the present invention.
Figure 10B is an example of importing concrete individually anonymized source and target schema elements for each mapping element of a mapping, in accordance with an embodiment of the present invention.
Figure 11A is an example of retrieving concrete anonymized mapping elements, in accordance with an embodiment of the present invention.
Figure 11B is an example of retrieving concrete individually anonymized source and target schema elements for each mapping element of a mapping, in accordance with an embodiment of the present invention.
Figure 12 is a block diagram of an exemplary computer system, in accordance with an embodiment of the present invention.

### Detailed Description

Embodiments of systems and methods for importing and retrieving schema mappings while preserving privacy and confidentiality are described herein. In the following description, numerous specific details are set forth to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

Reference throughout this specification to "one embodiment" or "this embodiment" means that a particular feature, structure, or characteristic described in connection with the embodiment is included in at least one embodiment of the present invention. Thus, the appearances of the phrases "in one embodiment" or "in this embodiment" in various places throughout this specification are not necessarily all referring to the same embodiment. Furthermore, the particular features, structures, or characteristics may be combined in any suitable manner in one or more embodiments.

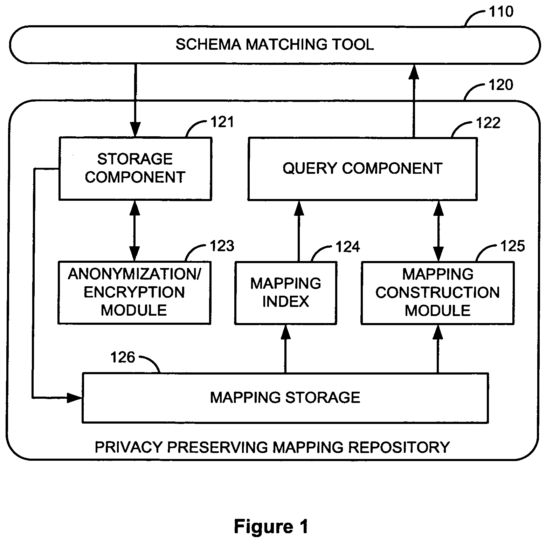

Figure 1 is a block diagram of a system for importing and retrieving schema mappings while preserving privacy and confidentiality. Privacy preserving mapping repository 120 receives mappings, created either manually or by the schema matching tool 110, as input. Using the anonymization/encryption module 123, the storage component 121 triggers the transformation of the received mappings to a privacy-preserving representation. The anonymized mappings are persisted in the mapping storage 126. During the schema matching process, the schema matching tool 110 provides the privacy preserving mapping repository 120 with a source schema and a target schema. The query component 122 looks for existing mappings in the mapping storage 126 by using the mapping index 124. In one embodiment, the mappings available in the mapping storage 126 are indexed by the elements of the source schema. The mapping construction module 125 composes a matching mapping by using the existing mappings available in the mapping storage 126 and the provided source and target schemas. The constructed mapping is then returned to the schema matching tool 110.

According to one embodiment, a mapping element is a relation between one element of the source schema and one element of the target schema. A mapping consists of one or more mapping elements. Multiple elements in a mapping imply the existence of complex relations (e.g., one-to-many, many-to-one, or many-to-many) between source and target elements. Additional information specifies how exactly the elements contribute to the overall mapping. The additional information consists of a mapping category and an optional mapping expression. In this embodiment, there are three mapping categories defined: MOVE, SPLIT, and CONCAT. MOVE maps an element of the source schema to a related element of the target schema without any modifications. SPLIT maps an element of the source schema to more than one related elements of the target schema. CONCAT maps more than one elements of the source schema to a related element of the target schema.

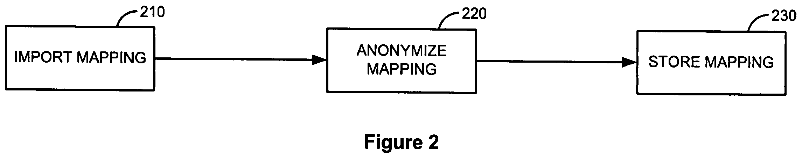

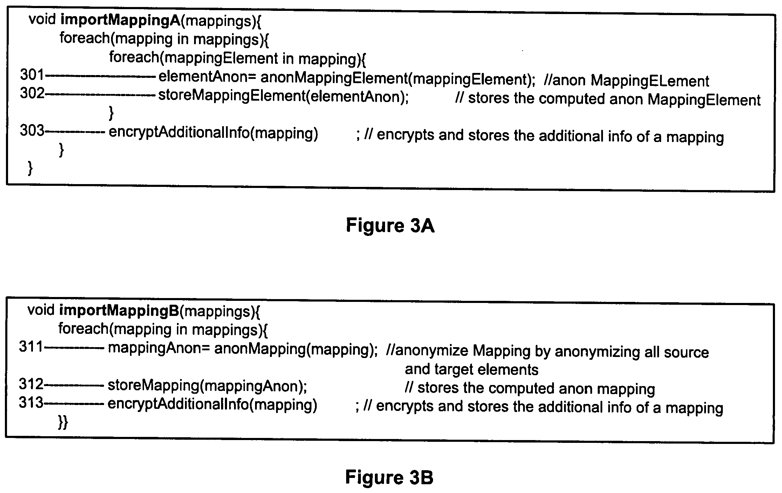

Figure 2 is a flow diagram of a process for importing anonymized mappings into the privacy preserving mapping repository 120. Mappings are imported at block 210 along with the original schema structure and the additional information specifying the relation between schema elements. At block 220, the mappings are anonymized, thus transformed to a privacy-preserving representation, which is hiding the original schema structure by using anonymization algorithms, (e.g., described further with reference to Figure 3 below). It is not possible to reverse engineer the original schemas from the privacy-preserving representation without additional knowledge. The anonymized mappings are stored in the mapping storage 126 at block 230.

Figure 3A is an illustration in pseudo code of an exemplary method for importing schema mappings and anonymizing entire mapping elements. The method receives a set of mappings as a parameter. Two operations are performed for each mapping of the received set. At line 301, each mapping element of each mapping is anonymized. At line 302, the already anonymized mapping element is stored in the mapping storage 126. Once all mapping elements are anonymized for a given mapping, the additional information for this mapping is encrypted and stored at line 303. This method anonymizes entire mapping elements by using a cryptographically secured one-way function. After the transformation, the relations from individual mapping elements to the whole mapping are hidden. The additional information is encrypted as well. This information can only be reconstructed when the complete mapping it belongs to is retrieved.

Figure 3B is an illustration in pseudo code of an exemplary method for importing schema mappings, anonymizing each source and target schema element for each mapping element individually. Like the method described above with reference to Figure 3A, this method receives a set of mappings as a parameter. The difference is that each source and target schema element for each mapping element of the received set is anonymized individually at line 311. The anonymized source and target schema elements are stored in the mapping storage 126 at line 312. The additional information for this mapping is encrypted and stored at line 313. This way more structural information is preserved as compared to the method described above in reference to Figure 3A. The additional structural information allows more efficient searching operations at the cost of lower anonymity level.

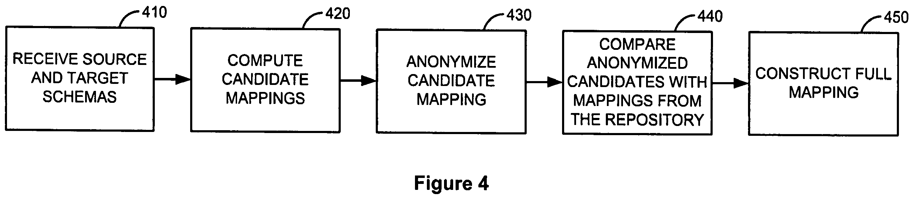

Figure 4 is a flow diagram of a process for retrieving anonymized mappings from the privacy preserving mapping repository 120. The privacy preserving mapping repository 120 is queried for existing mappings by the schema matching tool 110. At block 410, the process receives the source and target schemas from the schema matching tool 110. Candidate mappings are computed at block 420 from the received schemas. At block 430, the candidate mappings are anonymized, thus transformed to privacy-preserving representations. The anonymized candidates are compared to the mappings stored in the mapping storage 126 of the privacy preserving mapping repository 120 at block 440. Using the matching anonymized mappings found in the mapping storage 126 and the provided source and target schemas, a full mapping is constructed and returned at block 450.

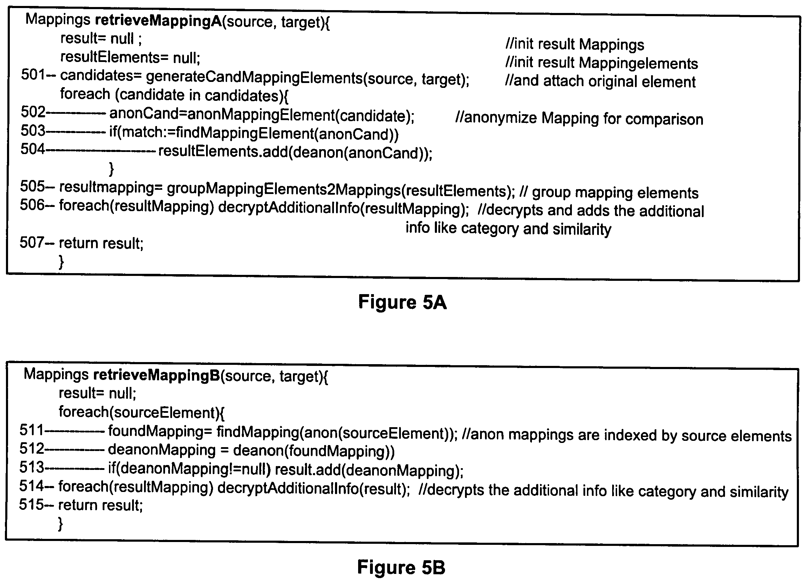

Figure 5A is an illustration in pseudo code of an exemplary method for retrieving schema mappings and searching for matching anonymized mapping elements. The method receives a source schema and a target schema as parameters. Candidate mapping elements are generated at line 501. In one embodiment, heuristic methods may be used to generate the candidate mapping elements in order to minimize the number of results. For each of the candidate mapping elements, the following operations are performed. At line 502, the candidate mapping element is anonymized and at line 503, the anonymized mapping element is compared to the existing mapping elements in the mapping storage 126. If there is a matching element available, it is de-anonymizied at line 504, using the information from the provided source and target schemas, and it is added to the result set of mapping elements. At line 505, the result set of mapping elements is grouped to full mapping. At line 506, the additional information is decrypted and added to the full mapping. The full mapping is returned at line 507.

Figure 5B is an illustration in pseudo code of an exemplary method for retrieving schema mappings, searching for matching anonymized source and target schema elements. Like the method described above in reference to Figure 5A, this method receives a source schema and a target schema as parameters. For each element of the source schema, the following operations are performed. At line 511, the source element is anonymized and used to find matching anonymized source and target schema element pairs in the mapping storage 126, which are indexed by the elements of the source schema. At line 512, the anonymized source and target schema element pairs that are found are de-anonymized using the information from the provided source and target schemas. The de-anonymized source and target schema element pairs are added to the result at line 513. At line 514, the additional information is decrypted and added to the result. The full mapping is returned at line 515.

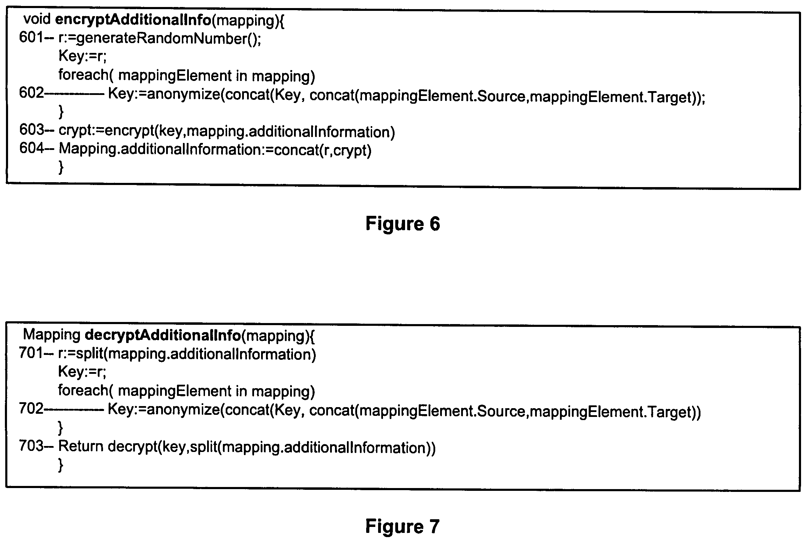

Figure 6 is an illustration in pseudo code of an exemplary method for encrypting additional information. The method receives a mapping as a parameter. At line 601 a random number is generated. It is the base for the encryption of the additional information. At line 602, the encryption key is further extended by the anonymized concatenation of the key and the source and target schema elements of each mapping element of the provided mapping. The additional information is encrypted at line 603. The additional information of the provided mapping is updated with the concatenation of the base and the encrypted additional information at line 604.

Figure 7 is an illustration in pseudo code of an exemplary method for decrypting additional information. Like the method described above in reference to Figure 6, this method receives a mapping as a parameter. At line 701, the base of the encryption is extracted from the encrypted additional information. The encryption key is restored at line 702, as described above in reference to Figure 6. At line 703, the additional information is decrypted using the restored key and the decrypted additional information is returned as a result of the decrypting method.

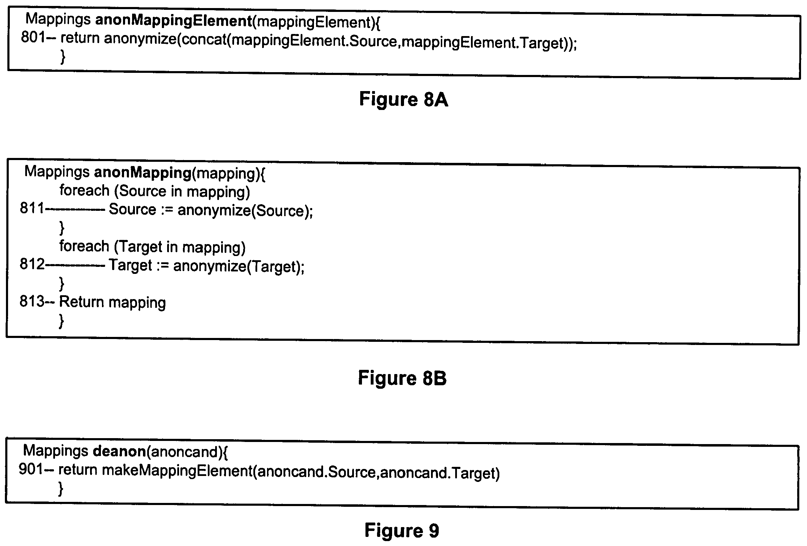

Figure 8A is an illustration in pseudo code of an exemplary method for anonymizing an entire mapping element. The method receives a mapping element as a parameter. The result returned at line 801 is the anonymized concatenation of the source and the target schema elements of the provided as a parameter mapping element.

Figure 8B is an illustration in pseudo code of an exemplary method for anonymizing a mapping by anonymizing each source and target schema element for each mapping element individually. The method receives a mapping as a parameter. At line 811, each source schema element of each mapping element in the mapping is replaced with an anonymized representation. At line 812, each target schema element of each mapping element in the mapping is replaced with an anonymized representation. The anonymized mapping is returned as a result at line 813. This method achieves higher granularity level than the method described in reference to Figure 8A above since, for each mapping element, the source schema element is anonymized separately from the target schema element.

Figure 9 is an illustration in pseudo code of an exemplary method for de-anonymizing a mapping element. The method receives an anonymized mapping element as a parameter. The result returned at line 901 is a new mapping element consisting of the de-anonymized source and target schema elements of the provided mapping element parameter.

In this embodiment of the invention, the anonymization, encryption, and decryption are based on cryptographically secure primitives. A collision-resistant one-way hash function is used for anonymizing and a symmetric cryptosystem is used for encryption and decryption. Since the keys are generated from random values and further information injected by using a collision-resistant one-way hash function, a sufficient number of bits for the encryption/decryption key are always generated. The choice of hash functions, symmetric cryptosystems and their key lengths can be made according to the application and user requirements.

In another embodiment of the invention, the anonymization function might be implemented to employ a text value along with the random number. The provided text value might be represented by a different anonymized value for each anonymization. This way code book attacks will be rendered infeasible in practice. The employed random number would need to be stored with the anonymized value and anonymizing candidates would need to be repeated for each comparison with a different anonymized value in the database. Such an embodiment would provide better security at the cost of less efficient search operations.

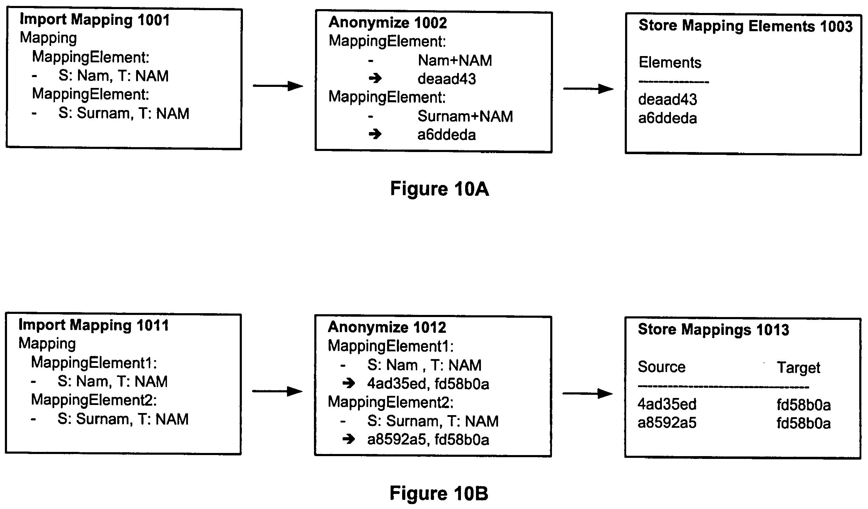

Figure 10A is an example of importing concrete anonymized mapping elements. At block 1001, two mapping elements are received from the storage component 121. The first one maps the source schema element 'Nam' to the target schema element 'NAM' and the second one maps the source schema element 'Surnam' to the target schema element 'NAM'. At block 1002, the mapping elements are anonymized by the anonymization / encryption module 123 using the anonymization method described in reference to Figure 8A above. In this and the following examples, an MD5 encryption is used. The results are 'deaad43' for the concatenation of the source and target schema elements of the first mapping element and 'a6ddeda' for the concatenation of the source and target schema elements of the second mapping element. At block 1003, the anonymized mapping elements are stored in the mapping storage 126.

Figure 10B is an example of importing concrete individually anonymized source and target schema elements for each mapping element of a mapping. At block 1011, two mapping elements are received from the storage component 121. The first one maps the source schema element 'Nam' to the target schema element 'NAM' and the second one maps the source schema element 'Surnam' to the target schema element 'NAM'. At block 1012, the mapping elements are anonymized by the anonymization / encryption module 123 using the anonymization method described in reference to Figure 8B above. Each source and target schema element of each mapping is anonymized separately and the results are '4ad35ed' for 'Nam', 'fd58b0a' for 'NAM', and 'a8592a5' for 'Surnam'. At block 1013, the anonymized source and target schema elements are stored in the mapping storage 126.

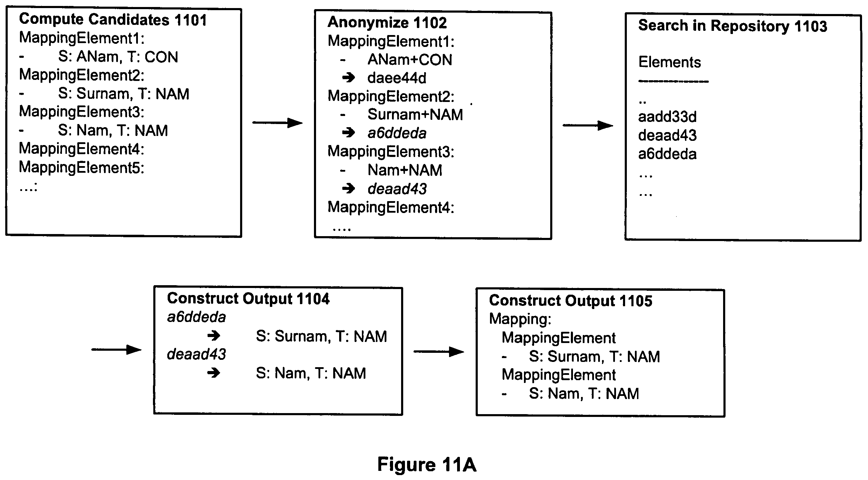

Figure 11A is an example of retrieving concrete anonymized mapping elements. The candidate mapping elements, constructed by the mapping construction module 125 at block 420, are displayed at block 1101. The first mapping element maps the source schema element 'ANam' to the target schema element 'CON'. The second mapping element maps the source schema element 'Surnam' to the target schema element 'NAM', and the third mapping element maps the source schema element 'Nam' to the target schema element 'NAM'. At block 1102, each candidate mapping element is anonymized using the anonymization method described in reference to Figure 8A above. The results are 'daee44d' for the concatenation of the source and target elements of the first mapping element, 'a6ddeda' for the concatenation of the source and target elements of the second mapping element, and 'deaad43' for the concatenation of the source and target elements of the third mapping element. At block 1103, the anonymized candidates are compared to the anonymized mapping elements in the mapping storage 126 and two matching anonymized mapping elements are found. At blocks 1104 and 1105, each of the matching anonymized mapping elements is de-anonymized and the output mapping is created.

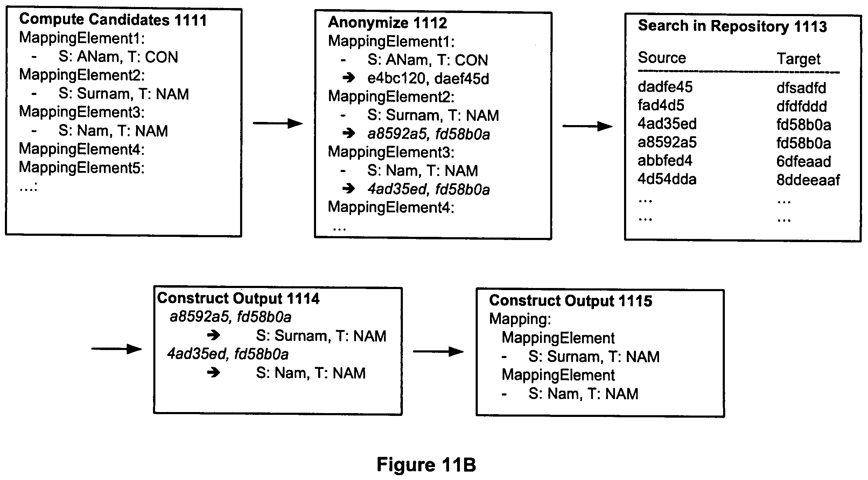

Figure 11B is an example of retrieving concrete individually anonymized source and target schema elements for each mapping element of a mapping. At block 1111, the candidate mapping elements are constructed as described in reference to Figure 11A above. At block 1112, each source and target schema element of each mapping is anonymized separately using the anonymization method described in reference to Figure 8B above. The results are 'e4bc120' for 'ANam', 'daef45d' for 'CON', 'a8592a5' for 'Surnam', 'fd58b0a' for 'NAM', and '4ad35ed' for 'Nam'. At block 1113, the anonymized source and target schema elements are compared to the anonymized source and target schema elements in the mapping storage 126 and two matching pairs are found. At blocks 1114 and 1115, each of the matching pairs of anonymized source and target schema elements is de-anonymized and the output mapping is created.

Some example embodiments of the invention may include the above-illustrated modules and methods being written as one or more software components. These components, and the functionality associated with each, may be used by client, server, or peer computer systems. These components may be written in any computer programming languages including object-oriented computer languages such as C++, and Java. The functionality described herein may be distributed among different components and may be linked to each other via application programming interfaces and compiled into one complete server and/or client application. Furthermore, these components may be linked together via distributed programming protocols. Some example embodiments of the invention may include remote procedure calls being used to implement one or more of these components across a distributed programming environment. For example, a logic level may reside on a first computer system that is remotely located from a second computer system containing an interface level (e.g., a graphical user interface). These first and second computer systems can be configured in a server-client, peer-to-peer, or other configurations.

Software components described above are tangibly stored on a machine readable medium including a computer readable medium. The term "computer readable medium" should be taken to include a single medium or multiple media that stores one or more sets of instructions. The term "computer readable medium" should also be taken to include medium that is capable of tangibly storing or encoding instructions for execution by a computer system and that causes the computer system to perform any of the methods described herein.

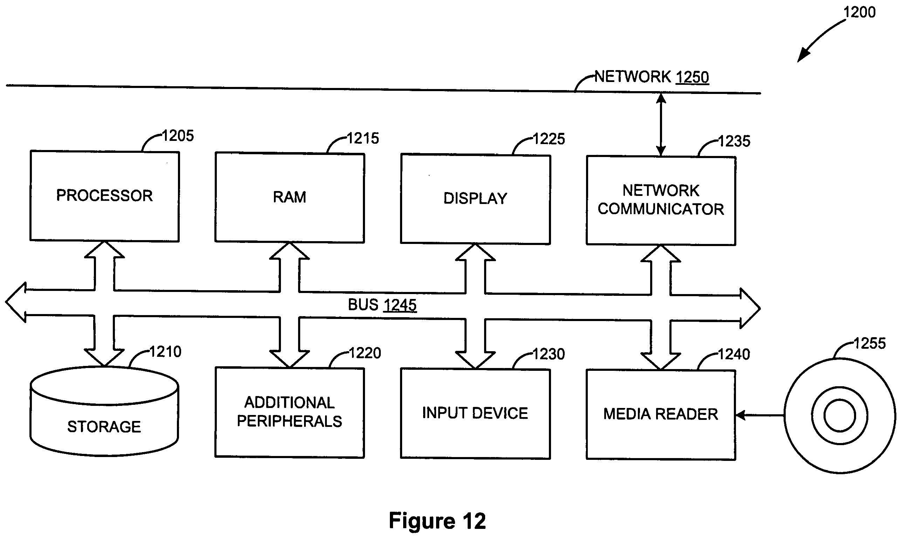

Figure 12 is a block diagram of an exemplary computer system 1200. The computer system 1200 includes a processor 1205 that executes programming code tangibly stored on a computer readable medium 1255 to perform the methods of the invention described herein. The computer system 1200 includes a media reader 1240 to read the programming code from the computer readable medium 1255 and store the code in storage 1210 or in random access memory (RAM) 1215. The storage 1210 provides a large space for keeping static data where the programming code could be stored for later execution. From the programming code, a series of instructions are generated and dynamically stored in the RAM 1215. The processor 1205 reads instructions from the RAM 1215 and performs actions as instructed. According to one embodiment of the invention, the computer system 1200 further includes a display 1225 to provide visual information to users, an input device 1230 to provide a user with means for entering data and interfere with computer system 1200, one or more additional peripherals 1220 to further expand the capabilities of the computer system 1200, and a network communicator 1235 to connect the computer system 1200 to a network 1250. The components of the computer system 1200 are interconnected via a bus 1245.

The above description of illustrated embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize.

These modifications can be made to the invention in light of the above detailed description. The terms used in the following claims should not be construed to limit the invention to the specific embodiments disclosed in the specification and the claims. Rather, the scope of the invention is to be determined entirely by the following claims, which are to be construed in accordance with established doctrines of claim interpretation.

## Claims

1. A computerized method for importing and retrieving schema mappings, comprising:
receiving (410) a source data schema with source schema elements;
receiving (410) a target data schema with target schema elements;
computing (420) candidate mappings between the source schema elements and the target schema elements;
anonymizing (430) the candidate mappings, thus transformed to privacy-preserving representations;
storing the anonymized candidate mappings in a mapping repository (120);
comparing (440) the anonymized candidate mappings to existing anonymized mappings stored in the mapping repository (120);
extracting matching anonymized mappings from the mapping repository (120); and
constructing (450) full mapping by using the matching anonymized mappings found in the mapping repository (120) and the received source data schema and the received target data schema, wherein generating the mapping between the source schema elements and the target schema elements comprises:
determining relations between the source schema elements and the target schema elements;
generating mapping elements, based on the determined relations;
for each of the determined relations, including one of the mapping elements in the mapping; and
if there are one-to-many, many-to-one, or many-to-many relations between the source schema elements and the target schema elements, including additional information in the mapping to describe the one-to-many, many-to-one, or many-to-many relations, wherein including the additional information in the mapping comprises encrypting the additional information, based on an anonymized concatenation of the source schema elements and the target schema elements.

2. The method according to claim 1, wherein reconstructing the full mapping from the matching anonymized mappings comprises:
de-anonymizing the mappings, using the source schema and the target schema; and
decrypting the additional information included in the mappings.

3. The method according to any one of claims 1 or 2, wherein anonymizing the generated mapping comprises encrypting at least one mapping element of the generated mapping.

4. The method according to claim 3, wherein encrypting comprises applying one or more encryption techniques selected from a group consisting of one-way hash function and a symmetric cryptosystem.

5. The method according to any one of claims 1 to 4, wherein anonymizing the generated mapping further comprises encrypting at least one source schema element and at least one target schema element for each mapping element of the generated mapping.

6. The method according to any one of claims 1 to 5, wherein storing the anonymized mapping in the mapping repository (120) comprises indexing the mapping by the source schema elements.

7. A system for importing and retrieving schema mappings comprising means adapted to perform all the method steps of claim 1 to 6, comprising:
a schema matching tool (110) to create schema mappings from source and target data schemas; and
a privacy preserving mapping repository (120) to import, anonymize, search, and retrieve schema mappings.

8. The system according to claim 7, wherein the privacy preserving mapping repository (120) comprises:
a storage component (121) to receive mappings;
an anonymization/encryption module (123) to anonymize the received mappings;
a mapping storage (126) to store anonymized mappings;
a query component (122) to search the mapping storage for existing anonymized mappings;
a mapping construction module (125) to compose full mappings, using the existing anonymized mappings; and
a mapping index module (124) to index the stored anonymized mappings.

9. A computer readable medium having a set of instructions stored therein which when executed, cause a machine to perform a method according to any one of claims 1 to 6.

## Patentansprüche

1. Computergestütztes Verfahren zum Importieren und Abrufen von Schemaabbildungen, welches Folgendes umfasst:
Empfangen (410) eines Quelldatenschemas mit Quellschemaelementen,
Empfangen (410) eines Zieldatenschemas mit Zielschemaelementen,
Berechnen (420) von Kandidatenabbildungen zwischen den Quellschemaelementen und den Zielschemaelementen,
Anonymisieren (430) der Kandidatenabbildungen, die auf diese Weise in den Datenschutz bewahrende Repräsentationen umgewandelt werden,
Speichern der anonymisierten Kandidatenabbildungen in einem Abbildungsspeicher (120),
Vergleichen (440) der anonymisierten Kandidatenabbildungen mit existierenden anonymisierten Abbildungen, die im Abbildungsspeicher (120) gespeichert sind,
Extrahieren übereinstimmender anonymisierter Abbildungen aus dem Abbildungsspeicher (120) und
Konstruieren (450) der vollständigen Abbildung unter Verwendung der im Abbildungsspeicher (120) gefundenen übereinstimmenden anonymisierten Abbildungen und des empfangenen Quelldatenschemas und Zieldatenschemas, wobei das Erzeugen der Abbildung zwischen den Quellschemaelementen und den Zielschemaelementen Folgendes umfasst:
Bestimmen von Beziehungen zwischen den Quellschemaelementen und den Zielschemaelementen,
Erzeugen von Abbildungselementen auf der Grundlage der bestimmten Beziehungen,
für jede der bestimmten Beziehungen, Aufnehmen eines der Abbildungselemente in die Abbildung und
falls es Eine-zu-viele-, Viele-zu-einem- oder Viele-zu-viele-Beziehungen zwischen den Quellschemaelementen und den Zielschemaelementen gibt, Aufnehmen zusätzlicher Informationen in die Abbildung, um die Eine-zu-viele-, Viele-zu-einem- oder Viele-zu-viele-Beziehungen zu beschreiben, wobei bei der Aufnahme der zusätzlichen Informationen in die Abbildung die zusätzlichen Informationen auf der Grundlage einer anonymisierten Verkettung der Quellschemaelemente und der Zielschemaelemente verschlüsselt werden.

2. Verfahren nach Anspruch 1, wobei das Rekonstruieren der vollständigen Abbildung aus den übereinstimmenden anonymisierten Abbildungen Folgendes umfasst:
Deanonymisieren der Abbildungen unter Verwendung des Quellschemas und des Zielschemas und
Entschlüsseln der in den Abbildungen enthaltenen zusätzlichen Informationen.

3. Verfahren nach einem der Ansprüche 1 oder 2, wobei beim Anonymisieren der erzeugten Abbildung wenigstens ein Abbildungselement der erzeugten Abbildung verschlüsselt wird.

4. Verfahren nach Anspruch 3, wobei bei der Verschlüsselung eine oder mehrere Verschlüsselungstechniken angewendet werden, die aus einer Gruppe ausgewählt werden, die aus einer Einweg-Hash-Funktion und einem symmetrischen Kryptosystem besteht.

5. Verfahren nach einem der Ansprüche 1 bis 4, wobei beim Anonymisieren der erzeugten Abbildung ferner wenigstens ein Quellschemaelement und wenigstens ein Zielschemaelement für jedes Abbildungselement der erzeugten Abbildung verschlüsselt wird.

6. Verfahren nach einem der Ansprüche 1 bis 5, wobei beim Speichern der anonymisierten Abbildung im Abbildungsspeicher (120) die Abbildung durch die Quellschemaelemente indexiert wird.

7. System zum Importieren und Abrufen von Schemaabbildungen, das Mittel zur Ausführung aller Verfahrensschritte nach den Ansprüchen 1 bis 6 umfasst, umfassend:
ein Schemaabgleichswerkzeug (110) zum Erzeugen von Schemaabbildungen aus Quell- und Zieldatenschemata und
einen Datenschutz bewahrenden Abbildungsspeicher (120) zum Importieren, Anonymisieren, Suchen und Abrufen von Schemaabbildungen.

8. System nach Anspruch 7, wobei der Datenschutz bewahrende Abbildungsspeicher (120) Folgendes umfasst:
eine Speicherkomponente (121) zum Empfangen von Abbildungen,
ein Anonymisierungs-/Verschlüsselungsmodul (123) zum Anonymisieren der empfangenen Abbildungen,
einen Abbildungsspeicherplatz (126) zum Speichern anonymisierter Abbildungen,
eine Abfragekomponente (122) zum Durchsuchen des Abbildungsspeichers nach existierenden anonymisierten Abbildungen,
ein Abbildungskonstruktionsmodul (125) zum Zusammensetzen vollständiger Abbildungen unter Verwendung der existierenden anonymisierten Abbildungen und
ein Abbildungsindexmodul (124) zum Indexieren der gespeicherten anonymisierten Abbildungen.

9. Computerlesbares Medium mit einem Satz darin gespeicherter Befehle, die, wenn sie ausgeführt werden, eine Maschine veranlassen, ein Verfahren nach einem der Ansprüche 1 bis 6 auszuführen.

## Revendications

1. Procédé informatisé pour importer et récupérer des mappages de schémas, comportant les étapes consistant à :
recevoir (410) un schéma de donnée source ayant des éléments de schéma source ;
recevoir (410) un schéma de données cible ayant des éléments de schéma cible ;
calculer (420) des mappages candidats entre les éléments de schéma source et les éléments de schéma cible ;
rendre anonymes (430) les mappages candidats, ainsi transformés en représentations de protection de la vie privée ;
mémoriser les mappages candidats rendus anonymes dans un registre de mappages (120) ;
comparer (440) les mappages candidats rendus anonymes à des mappages rendus anonymes existants mémorisés dans le registre de mappage (120) ;
extraire des mappages rendus anonymes concordants du registre de mappages (120) ; et
construire (450) un mappage complet en utilisant les mappages rendus anonymes concordants trouvés dans le registre de mappages (120) et le schéma de donnée source reçu et le schéma de données cible reçu, dans lequel la génération du mappage entre les éléments de schéma source et les éléments de schéma cible comportent les étapes consistant à :
déterminer des relations entre les éléments de schéma source et les éléments de schéma cible ;
générer des éléments de mappage, sur la base des relations déterminées ;
pour chacune des relations déterminées, inclure l'un des éléments de mappage dans le mappage ; et
s'il existe des relations de un à plusieurs, de plusieurs à un, ou de plusieurs à plusieurs entre les éléments de schéma source et les éléments de schéma cible, inclure des informations supplémentaires dans le mappage pour décrire les relations de un à plusieurs, de plusieurs à un, ou de plusieurs à plusieurs, dans lequel l'intégration des informations supplémentaires dans le mappage comporte de crypter les informations supplémentaires, sur la base d'une concaténation rendue anonyme des éléments de schéma source et des éléments de schéma cible.

2. Procédé selon la revendication 1, dans lequel la reconstruction du mappage entier à partir des mappages rendus anonymes concordants comporte les étapes consistant à :
supprimer l'anonymat des mappages, en utilisant le schéma source et le schéma cible ; et
décrypter les informations supplémentaires intégrées dans les mappages.

3. Procédé selon l'une quelconque des revendications 1 ou 2, dans lequel l'anonymisation du mappage généré comporte de crypter au moins un élément de mappage du mappage généré.

4. Procédé selon la revendication 3, dans lequel le cryptage comporte d'appliquer une ou plusieurs techniques de cryptage choisies parmi un groupe constitué d'une fonction de hachage unidirectionnelle et d'un crypto-système symétrique.

5. Procédé selon l'une quelconque des revendications 1 à 4, dans lequel l'anonymisation du mappage généré comporte en outre de crypter au moins un élément de schéma source et au moins un élément de schéma cible pour chaque élément de mappage du mappage généré.

6. Procédé selon l'une quelconque des revendications 1 à 5, dans lequel la mémorisation du mappage rendu anonyme dans le registre de mappage (120) comporte d'indexer le mappage par l'intermédiaire des éléments de schéma source.

7. Système pour importer et récupérer des mappages de schéma comportant des moyens adaptés pour mettre en oeuvre toutes les étapes du procédé selon les revendications 1 à 6, comportant :
un outil de concordance de schéma (110) pour créer des mappages de schéma à partir des schémas de données source et cible ; et
un registre de mappage de protection de la vie privée (120) pour importer, rendre anonyme, rechercher, et récupérer des mappages de schéma.

8. Système selon la revendication 7, dans lequel le registre de mappage de protection de la vie privée (120) comporte :
un composant de mémorisation (121) pour recevoir des mappages ;
un module de cryptage/anonymisation (123) pour rendre anonyme les mappages reçus ;
une mémoire de mappage (126) pour mémoriser des mappages rendus anonymes ;
un composant de requête (122) pour rechercher dans la mémoire de mappage des mappages rendus anonymes existants ;
un module de construction de mappage (125) pour composer des mappages complets, en utilisant les mappages rendus anonymes existants ; et
un module d'index de mappage (124) pour indexer les mappages rendus anonymes mémorisés.

9. Support lisible par ordinateur ayant au moins un ensemble d'instructions mémorisées dans celui-ci lesquelles lorsqu'elles sont exécutées, amènent une machine à mettre en oeuvre un procédé selon l'une quelconque des revendications 1 à 6.
